# EUROPÄISCHE PATENTSCHRIFT

(11) **EP 1 379 414 B1**
(45) Veröffentlichungstag und Bekanntmachung des Hinweises auf die Patenterteilung: **29.06.2005**
(21) Anmeldenummer: 02730109.2
(22) Anmeldetag: 05.04.2002
(51) Int. Cl.: B60S 3/04

(54) **TEXTILSTREIFENVORHANG FÜR AUTOWASCHANLAGEN**
TEXTILE STRIP CURTAIN FOR CAR WASH SYSTEMS
RIDEAU DE BANDES TEXTILES POUR INSTALLATIONS DE LAVAGE DE VEHICULES

(30) Priorität: 17.04.2001 DE 20106592 U
(43) Veröffentlichungstag der Anmeldung: 14.01.2004
(73) Patentinhaber: KOHLRUSS, Gregor, D-46325 Borken (DE); WIESNER, Hubert, D-46354 Südlohn (DE); Griebe, Oliver, 46414 Rhede (DE)
(72) Erfinder: KOHLRUSS, Gregor, D-46325 Borken (DE); WIESNER, Hubert, D-46354 Südlohn (DE); Griebe, Oliver, 46414 Rhede (DE)
(74) Vertreter: Behrendt, Arne, Dipl.-Ing.
(86) Internationale Anmeldenummer: PCT/EP2002/003782
(87) Internationale Veröffentlichungsnummer: WO 2002/085680

(56) Entgegenhaltungen:
- DE-A- 19 520 985
- DE-A- 19 811 942
- DE-A- 19 942 024
- DE-U- 29 521 320
- GB-A- 1 209 981

## Beschreibung

Die Erfindung betrifft eine Trocknungsvorrichtung für Autowaschanlagen mit einem relativ zu einem zu trocknenden Fahrzeug bewegbaren Textilvorhang, die jener nach der GB-A- 1 209 981 gattungsgemäß ausgebildet ist.

Zur Reinigung und Pflege von Kraftfahrzeugen werden diese in automatischen Waschanlagen, wie z. B. Portal-Waschanlagen und Waschstraßen, gewaschen, gewachst und getrocknet. Dabei werden entweder bewegliche oder unbewegliche Reinigungseinrichtungen eingesetzt.

Bei herkömmlichen Portal-Waschanlagen wird das stillstehende Fahrzeug durch die beweglichen Reinigungseinrichtungen gereinigt. Im Gegensatz dazu werden Fahrzeuge in automatischen Waschstraßen auf Schienen durch stehenden Reinigungseinrichtungen geschleppt und gereinigt.

Als Reinigungselemente für den Waschprozeß dienen zur Reinigungseinrichtung gehörende Tuchstreifen, Bürsten oder Borsten. Durch Hin- und Herbewegen dieser Reinigungselemente wird die Karosserie der Fahrzeuge gereinigt und gewaschen. Danach wird das Fahrzeug mit Wasser abgespült und ggf. gewachst. Abschließend wird das Fahrzeug mit einem Gebläse getrocknet. Jedoch wird mit dem Gebläse das ganze Wasser nicht entfernt, so daß nach dem Trocknungsprozeß noch Wassertropfen oder Wasserstreifen auf dem Kraftfahrzeug verbleiben, die dann beim Verdunsten Flecken bilden.

Üblicherweise werden daher zur Entfernung dieser Restwassertropfen in Waschstraßen häufig längs-, quer- und rundlaufende Mittersysteme oder rotierende Walzen eingesetzt, die mit Textilstreifen besetzt sind. Bekannt sind bereits Textilstreifen aus Vliesen, Geweben, Filzen oder Mikrofasern, welche material-, konstruktions- und konfektionsseitig so ausgebildet sind, daß sie die verbleibenden Wassertropfen aufsaugen können.

Herkömmliche Textilstreifen aus Vliesen oder Filzen haben jedoch den Nachteil, daß sie nur über eine begrenzte Wasseraufnahmefähigkeit verfügen und daher bei längerem Betrieb der Anlage das Wasser wieder auf die zu behandelnden Fahrzeuge abtropfen lassen, so daß durch das Verdunsten wieder die unerwünschten Wasserflecke entstehen.

Dreischichtige Textilstreifen, bei denen die Innenschicht aus verdichteten synthetischen Mikrofasern und die beiden Deckschichten aus Mikrofasern mit geringer Wasseraufnahmefähigkeit bestehen, sind bekannterweise aufgrund ihrer Kapillareffekte extrem saugfähig, jedoch auch sehr teuer. Auch hierbei ist die Saugfähigkeit aufgrund der zwischen den beiden festen Schichten eingebetteten Saugschicht vom Volumen her begrenzt. Des weiteren ist die Aufbereitung solcher Textilstreifen für die nächste Verwendung äußerst aufwendig, da das aufgesaugte Wasser nur schlecht wieder entfernt werden kann. Auch das in Ritzen und Rillen des Fahrzeugs eingedrungene Wasser kann aufgrund der Steifigkeit des Mikrofaser-Textilstreifens nicht entfernt werden.

Die GB-A-1 209 981 offenbart eine Trocknungsvorrichtung für Autowaschanlagen mit einem relativ zu dem zu trocknenden Fahrzeug bewegbaren Textilvorhang. Bei dieser Trocknungsvorrichtung wird eine Vielzahl von senkrecht in die Fahrzeugbewegungsbahn herunterhängenden Textilstreifen aus saugfähigem Material mittels eines Fördergliedes längs zur Fahrzeugbewegungsbahn- bewegt. Als saugfähiges Material wird Leder vorgeschlagen. Nachteilig bei der Verwendung von Leder ist, dass dieses Material aufgrund seiner Steifigkeit nicht in die Ritzen und Rillen einer Fahrzeugkarosserie eindringen und dort angesammeltes Wasser aufnehmen kann.

Die deutsche Patentanmeldung DE-A-199 42 024 geht auf dieselben Anmelder zurück wie die vorliegende europäische Patentanmeldung. Sie betrifft ein Reinigungselement für Autowaschstrassen mit Reinigungsstreifen, die auf ihrer Vorderseite einen Reinigungsplüsch aus reinigungsaktiven Fasern aufweisen. Zweck dieses Reinigungselements ist die Entfernung von anhaftendem Schmutz, nicht aber das Trocknen des gereinigten Fahrzeugs. Darüber hinaus ist dass hier offenbarte Reinigungselement für rotierende Reinigungswalzen bestimmt.

Es wäre daher wünschenswert, ein Textilstreifenvorhang mit einem Textilmaterial derart auszubilden, daß die obengenannten Nachteile vermieden werden können.

Zur Lösung dieser Aufgabe schlägt die Erfindung, ausgehend von Trocknungsvorrichtung für Autowaschanlagen der eingangs genannten Art vor, daß der Textilvorhang als Textilstreifenvorhang mit einer Mehrzahl von nebeneinander an einer hin- und hergehend angetriebenen Trägerstange aufgehängten Streifen aus einem hochflorigen Plüsch aus saugfähigen Textilfasern ausgebildet ist.

Durch den Einsatz von hochflorigen Plüsch aus saugfähigen Textilfasern wird die Oberfläche des Textilstreifens vergrößert und somit auch die Wasseraufnahmefähigkeit verbessert. Die langen Flore des Plüsches können auch in schwer zu erreichende Stellen am Fahrzeug eindringen und das Restwasser aus den Ritzen und Rillen des Fahrzeugs aufsaugen. Des weiteren ist die Entfernung des aufgesaugten Restwassers aus den Langfloren mittels Auswringen, Schleudern und Trocknen sehr einfach, so daß die Textilstreifen sehr schnell wieder einsetzbar sind.

Bevorzugt sind die Fasern aus Viskose, Baumwolle, Mikrofasern oder Mischungen daraus. Sie weisen einen Titer von 0,5 dtex bis 5 dtex auf, somit ist ein großes Wasseraufnahme-Potential gewährleistet.

Zweckmäßigerweise weist der Reinigungsplüsch eine Florlänge von mehr als 10 mm auf. Dadurch wird die Oberfläche einerseits vergrößert und andererseits besitzen die Flore die Fähigkeit, in Rillen und Ritzen einzudringen und das Restwasser aufzunehmen.

Eine bevorzugte Ausführungsform der Erfindung ist ein als Strickware ausgebildeter Reinigungsplüsch; hierdurch wird nicht nur die Herstellung kostengünstig gestaltet, sondern auch die Aufbereitung der Textilstreifen für die Wiederverwendung vereinfacht.

Zweckmäßig wird aus einem einzigen Stück Plüsch mittels einer einseitigen Naht ein schlauchähnlicher Textilstreifen hergestellt. Mit dieser Ausgestaltung kann an dem oberen Textilstreifenende ein Befestigungselement, insbesondere eine Schlaufe, verbunden, bevorzugt vernäht, werden. Somit kann jeder Textilstreifen einzeln unabhängig von den daneben an der Trägerstange angeordneten Streifen abgenommen bzw. angehängt werden. Andere Befestigungselemente sind ebenso denkbar.

Vorzugsweise haben die Textilstreifen eine Länge von 200 cm und eine Breite von 11 cm; sie können jedoch nach Bedarf nach entsprechenden Vorgaben geändert werden. Die Anzahl der Textilstreifen für den Textilstreifenvorhang kann nach Bedarf vorgenommen werden.

Ein Ausführungsbeispiel des erfindungsgemäßen Textilstreifenvorhangs wird anhand von Zeichnungen kurz erläutert. Es zeigen:
- Fig 1: eine Seitenansicht einer Trägerstange mit nebeneinander angeordneten Textilstreifen
- Fig 2: eine Teilansicht des Textilstreifens ohne Befestigungselement
- Fig 3: einen Textilstreifen mit Befestigungselement

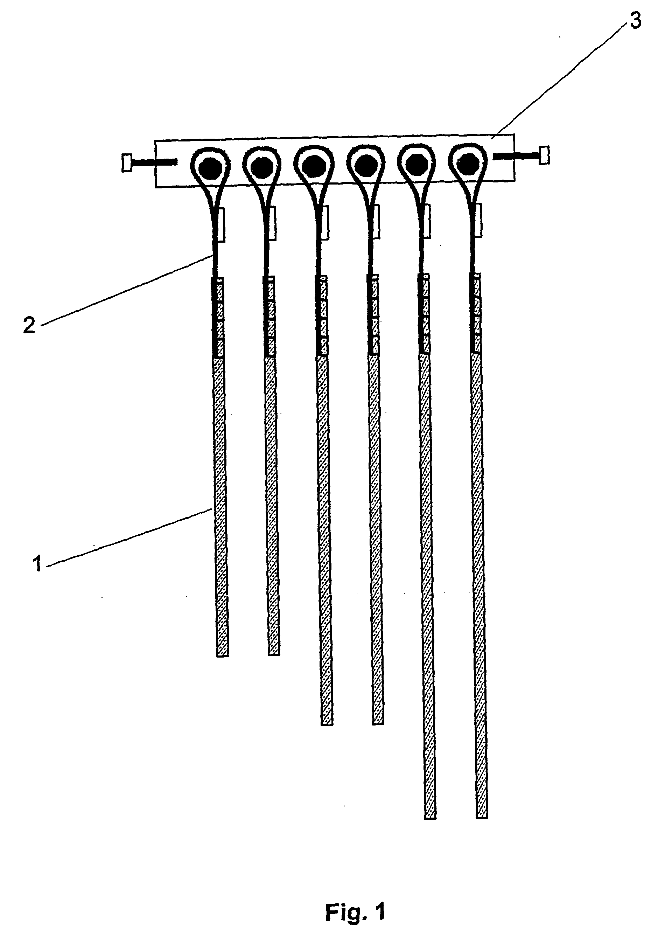

Fig. 1 zeigt eine Trägerstange 3 mit nebeneinander angeordnete Textilstreifen 1, die mit Befestigungselementen 2 versehen sind. Durch die unterschiedlichen Längen der Textilstreifen werden die optimalen Berührungspunkte zwischen Plüschflor und Karosserie garantiert.

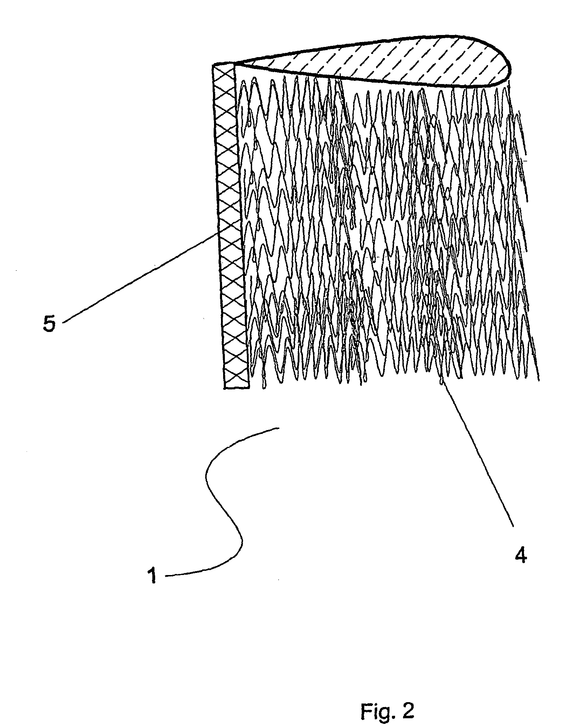

Fig. 2 zeigt den oberen Abschnitt des Textilstreifens 1 ohne Befestigungselement. Er ist aus einem einzigen Stück Plüsch 4 mittels einer Naht 5 zu einem schlauchähnlichen Streifen mit beidseitigen Plüschflächen ausgebildet.

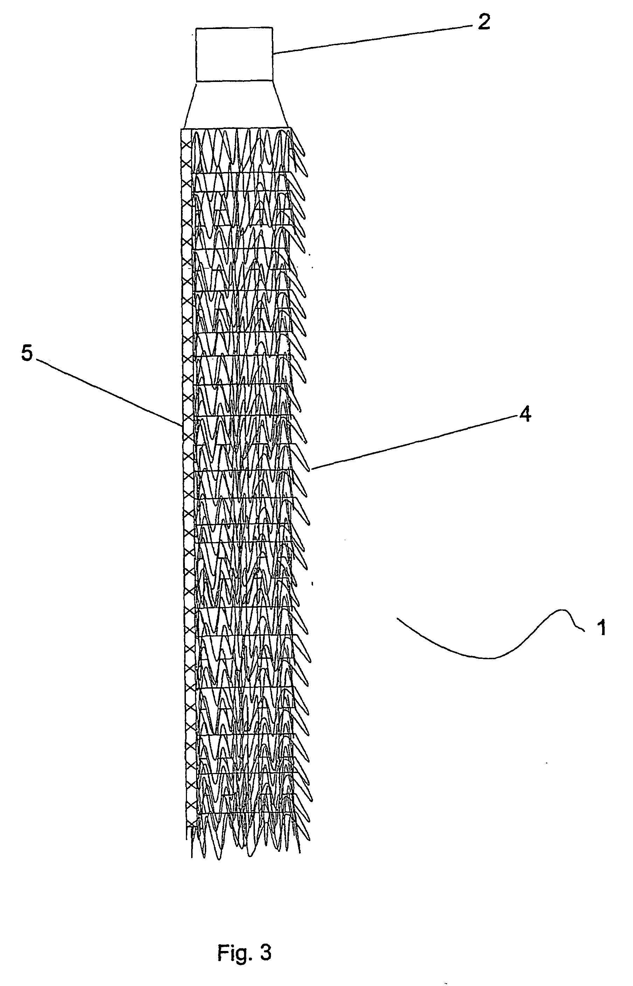

Fig. 3 zeigt den Textilstreifen 1 mit der Naht 5 und den Floren 4. Am oberen Ende befindet sich ein Teilstück des Befestigungselements 2, das mit dem Textilstreifen leicht verbunden, insbesondere vernäht, werden kann.

## Patentansprüche

1. Trocknungsvorrichtung für Autowaschanlagen mit einem relativ zu einem zu trocknenden Fahrzeug bewegbaren Textilvorhang, **dadurch gekennzeichnet, daß** der Textilvorhang als Textilstreifenvorhang mit einer Mehrzahl von nebeneinander an einer hin- und hergehend angetriebenen Trägerstange aufgehängten Streifen aus einem hochflorigen Plüsch aus saugfähigen Textilfasern ausgebildet ist.

2. Trocknungsvorrichtung nach Anspruch 1, **dadurch gekennzeichnet, daß** die saugfähigen Textilfasern einen Titer von 0,5 dtex bis 5 dtex haben.

3. Trocknungsvorrichtung nach den Ansprüchen 1 und 2, **dadurch gekennzeichnet, daß** die saugfähigen Textilfasern aus Viskose, Baumwolle, Mikrofasern oder Mischungen daraus bestehen.

4. Trocknungsvorrichtung nach Anspruch 1, **dadurch gekennzeichnet, daß** der Plüsch eine Florlänge von mehr als 10 mm hat.

5. Trocknungsvorrichtung nach einem der Ansprüche 1 bis 3, **dadurch gekennzeichnet, daß** der Plüsch eine Strickware ist.

## Claims

1. A drying apparatus for car washing installations comprising a textile curtain which is movable relative to a vehicle to be dried, **characterised in that** the textile curtain is in the form of a textile strip curtain having a plurality of strips of a long-pile plush of absorbent textile fibres, the strips being suspended in mutually juxtaposed relationship on a reciprocatingly driven carrier rod.

2. A drying apparatus according to claim 1 **characterised in that** the absorbent textile fibres are of a denier of 0.5 dtex to 5 dtex.

3. A drying apparatus according to claims 1 and 2 **characterised in that** the absorbent textile fibres comprise viscose, cotton, microfibres or mixtures thereof.

4. A drying apparatus according to claim 1 **characterised in that** the plush has a pile length of more than 10 mm.

5. A drying apparatus according to one of claims 1 to 3 **characterised in that** the plush is a knitwear.

## Revendications

1. Dispositif de séchage pour des installations de lavage de véhicules avec un rideau textile déplaçable relativement à un véhicule à sécher, **caractérisé en ce que** le rideau textile est réalisé comme rideau de bandes textiles avec plusieurs bandes accrochées les unes à côté des autres à une tige de support entraînée selon un mouvement alternatif, en une peluche a long poil en des fibres textiles aspirantes.

2. Dispositif de séchage selon la revendication 1, **caractérisé en ce que** les fibres textiles aspirantes ont un titre de 0,5 dtex à 5 dtex.

3. Dispositif de séchage selon les revendications 1 et 2, **caractérisé en ce que** les fibres textiles aspirantes sont constituées de viscose, de coton, de microfibres ou de mélanges de ceux-ci.

4. Dispositif de séchage selon la revendication 1, **caractérisé en ce que** la peluche possède une longueur de poil de plus de 10 mm.

5. Dispositif de séchage selon l'une des revendications 1 à 3, **caractérisé en ce que** la peluche est un article de tricotage.
